# EUROPÄISCHE PATENTSCHRIFT

(11) **EP 2 632 649 B1**
(45) Veröffentlichungstag und Bekanntmachung des Hinweises auf die Patenterteilung: **18.01.2017**
(21) Anmeldenummer: 11758483.9
(22) Anmeldetag: 23.09.2011
(51) Int. Cl.: B25F 5/00, B24B 23/02, B24B 55/00, H02K 7/10, B23Q 11/00

(54) **WERKZEUGMASCHINENBREMSVORRICHTUNG**
POWER TOOL BRAKING DEVICE
DISPOSITIF DE FREINAGE DE MACHINE-OUTIL

(30) Priorität: 29.10.2010 DE 102010043175
(43) Veröffentlichungstag der Anmeldung: 04.09.2013
(73) Patentinhaber: Robert Bosch GmbH, 70442 Stuttgart (DE)
(72) Erfinder: ESENWEIN, Florian, 73066 Uhingen-Holzhausen (DE)
(86) Internationale Anmeldenummer: PCT/EP2011/066587
(87) Internationale Veröffentlichungsnummer: WO 2012/055652

(56) Entgegenhaltungen:
- EP-A2- 1 327 497
- DE-A1- 3 512 365
- DE-A1- 4 344 424
- DE-A1- 4 446 157
- DE-A1- 19 636 873
- DE-U1-202005 007 459
- US-A- 5 595 531
- US-A1- 2002 066 632

## Beschreibung

### Stand der Technik

Aus der DE 199 32 578 B4 ist bereits eine Werkzeugmaschinenbremsvorrichtung einer tragbaren Werkzeugmaschine bekannt, die eine Magnetfeldbremseinheit aufweist.

Ein weiteres Beispiel ist aus DE19636873A1 bekannt.

### Offenbarung der Erfindung

Die Erfindung geht aus von einer Werkzeugmaschinenbremsvorrichtung, insbesondere von einer Handwerkzeugmaschinenbremsvorrichtung, einer tragbaren Werkzeugmaschine mit zumindest einer Magnetfeldbremseinheit, wie im Anspruch 1 dargestellt.

Es wird vorgeschlagen, dass die Werkzeugmaschinenbremsvorrichtung zumindest eine Antriebseinheit umfasst, die zumindest ein Antriebselement aufweist, an dem zumindest ein Bremselement der Magnetfeldbremseinheit angeordnet ist. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 50 kg, bevorzugt kleiner als 20 kg und besonders bevorzugt kleiner als 10 kg. Unter einer "Magnetfeldbremseinheit" soll hier insbesondere eine Bremseinheit, insbesondere eine elektromagnetische Bremseinheit, verstanden werden, die mittels einer Nutzung eines Magnetfelds eine Geschwindigkeit, insbesondere eine Umlaufgeschwindigkeit, eines sich bewegenden Bauteils, insbesondere eines sich drehenden Bauteils, im Vergleich zu einer Arbeitsgeschwindigkeit zumindest im Wesentlichen reibungsfrei verringert und/oder begrenzt, insbesondere zusätzlich zu einem reinen reibungsbedingten Verringern und/oder Begrenzen der Geschwindigkeit infolge einer Lagerung des Bauteils. Unter "im Wesentlichen reibungsfrei verringern und/oder begrenzen" soll hier insbesondere ein Abbremsen eines Bauteils verstanden werden, das bis auf lagerbedingte Reibkräfte und/oder strömungsbedingte Widerstandskräfte frei von Reibkräften erfolgt. Insbesondere erfolgt das Abbremsen des Bauteils mittels der Magnetfeldbremseinheit entkoppelt von einem Kontakt zwischen dem Bauteil und einem Reibbelag eines Bremselements. Grundsätzlich ist jedoch auch denkbar, dass zusätzlich zu der zumindest im Wesentlichen reibungsfreien Magnetfeldbremseinheit eine mit der Magnetfeldbremse gekoppelte oder entkoppelte Reibbremseinheit vorgesehen ist. Des Weiteren ist die Magnetfeldbremseinheit insbesondere als eine antriebsfremde Magnetfeldbremseinheit ausgebildet. Unter einer "antriebsfremden Magnetfeldbremseinheit" soll hier insbesondere eine Magnetfeldbremseinheit verstanden werden, die entkoppelt von einem Magnetfeld einer Elektromotoreinheit ein Abbremsen eines Bauteils mittels eines Magnetfelds bewirkt. Vorzugsweise ist ein Stator und/oder ein Läufer der Elektromotoreinheit entkoppelt von dem Magnetfeld der Magnetfeldbremseinheit. Die Magnetfeldbremseinheit ist bevorzugt dazu vorgesehen, das Bauteil insbesondere in einem Zeitraum größer als 0,1 s, bevorzugt größer als 0,5 s und besonders bevorzugt kleiner als 3 s ausgehend von einer Arbeitsgeschwindigkeit abzubremsen, insbesondere auf eine Geschwindigkeit abzubremsen, die kleiner als 50 % der Arbeitsgeschwindigkeit ist, bevorzugt kleiner als 20 % der Arbeitsgeschwindigkeit ist und besonders bevorzugt auf eine Geschwindigkeit von 0 m/s abzubremsen. Unter einer "Antriebseinheit" soll hier insbesondere eine Einheit verstanden werden, die zumindest eine Elektromotoreinheit umfasst und die dazu vorgesehen ist, mittels einer Energieumformung, insbesondere eine Umformung von elektrischer Energie in mechanische Energie, Antriebskräfte und/oder Antriebsdrehmomente zu erzeugen. Bevorzugt ist die Antriebseinheit mit einer Abtriebseinheit zur Übertragung der Antriebskräfte und/oder der Antriebsdrehmomente an ein Bearbeitungswerkzeug zur Bearbeitung eines Werkstücks gekoppelt. Mittels einer Anordnung eines Bremselements der Magnetfeldbremseinheit an einem Antriebselement der Antriebseinheit kann vorteilhaft eine kompakte Magnetfeldbremseinheit erreicht werden.

Des Weiteren wird vorgeschlagen, dass das Antriebselement, an dem das Bremselement zumindest teilweise angeordnet ist, als Ankerwelle ausgebildet ist. Untere einer "Ankerwelle" soll hier insbesondere eine Welle verstanden werden, auf der zumindest eine magnetisierbare Einheit der Elektromotoreinheit und/oder ein Ritzel zur Übertragung von Kräften und/oder Drehmomenten angeordnet ist. Besonders bevorzugt ist das Bremselement drehfest mit der Ankerwelle verbunden. Es ist jedoch auch denkbar, dass das Bremselement auf einer mit der Ankerwelle, insbesondere mittels einer lösbaren Kupplung, drehfest gekoppelten Welle angeordnet ist. Es kann vorteilhaft ein hoher Wirkungsgrad der Magnetfeldbremseinheit erreicht werden.

Vorzugsweise ist das Bremselement auf einer einer Antriebsseite abgewandten Seite der Antriebseinheit angeordnet. Unter einer "Antriebsseite" soll hier insbesondere eine Seite der Antriebseinheit verstanden werden, die entlang einer Rotationsachse der Antriebseinheit, insbesondere der Ankerwelle der Elektromotoreinheit, einer Abtriebseinheit zugewandt ist und/oder auf der ein Ritzel der Antriebseinheit angeordnet ist, das im Eingriff mit einem Zahnrad einer Abtriebseinheit ist. Es ist jedoch auch denkbar, dass das Bremselement auf der Antriebsseite der Antriebseinheit angeordnet ist. Es kann vorteilhaft bereits vorhandener Bauraum genutzt werden. Ferner kann ein durch eine auf der Antriebsseite angeordnete Lüftereinheit erzeugter Kühlluftstrom zur Kühlung der Antriebseinheit erreicht werden, der entkoppelt von einer Wärmeentwicklung der Magnetfeldbremseinheit ist.

Ferner wird vorgeschlagen, dass die Werkzeugmaschinenbremsvorrichtung eine mechanische Aktivierungseinheit aufweist. Unter einer "mechanischen Aktivierungseinheit" soll hier insbesondere eine Einheit verstanden werden, die infolge einer Relativbewegung einen Auslösevorgang und/oder einen Aktivierungsvorgang, insbesondere der Magnetfeldbremseinheit, einleitet, wobei die Relativbewegung von einer reinen Schaltbewegung eines Schaltelements zur Erzeugung eines elektrischen Signals abweichend ist und insbesondere von einer Bewegung eines Magnetelements und/oder von einer trägheitsbedingten Bewegung gebildet ist, insbesondere einer trägheitsbedingten Bewegung eines sich drehenden Antriebselements, Abtriebselement und/oder eines Bearbeitungswerkzeugs. In diesem Zusammenhang soll hier unter einem "Auslösevorgang" insbesondere eine mechanische, elektrische, magnetische und/oder elektronische Signalisierung eines Zustands verstanden werden, die dazu vorgesehen ist, einen Aktivierungsvorgang einzuleiten. Unter einem "Aktivierungsvorgang" soll hier insbesondere eine mechanische, elektrische, magnetische und/oder elektronische Aktivierung der Magnetfeldbremseinheit zur Erzeugung von Kräften und/oder Drehmomenten zum Abbremsen eines Bauteils verstanden werden. In diesem Zusammenhang soll unter "vorgesehen" insbesondere speziell programmiert, ausgelegt und/oder ausgestattet verstanden werden. In einer bevorzugten Ausführung der erfindungsgemäßen Werkzeugmaschinenbremsvorrichtung ist die Aktivierungseinheit dazu vorgesehen, den Auslösevorgang und den Aktivierungsvorgang infolge der Relativbewegung einzuleiten, insbesondere zumindest im Wesentlichen zeitlich unverzögert. Hierbei kann die Aktivierungseinheit dazu vorgesehen sein, infolge der Relativbewegung beispielsweise einen Auslösevorgang zu signalisieren und zumindest im Wesentlichen zeitgleich einen Aktivierungsvorgang der Magnetfeldbremseinheit einzuleiten. Eine Ausgestaltung der mechanischen Aktivierungseinheit, bei der durch die Relativbewegung ein Schalter als Auslösevorgang betätigt wird und ein mittels eines Aktors und/oder einer Federkraft und/oder mittels anderer, einem Fachmann als sinnvoll erscheinender Betätigungselemente an den Auslösevorgang anschließender Aktivierungsvorgang eingeleitet wird, ist ebenfalls denkbar. Ferner ist es ebenfalls denkbar, dass die Aktivierungseinheit eine Sensoreinheit umfasst, die die Relativbewegung sensiert und infolgedessen einen Auslösevorgang einleitet, wobei der Aktivierungsvorgang beispielsweise mittels eines Aktors eingeleitet wird. Mittels der erfindungsgemäßen Ausgestaltung der Werkzeugmaschinenbremsvorrichtung kann vorteilhaft eine zuverlässige Auslösung und/oder Aktivierung der Magnetfeldbremseinheit erreicht werden.

Des Weiteren wird vorgeschlagen, dass die Aktivierungseinheit infolge einer Relativbewegung wenigstens eine Kenngröße eines magnetischen Felds der Magnetfeldbremseinheit ändert. Unter einer "Kenngröße eines magnetischen Felds" soll hier insbesondere ein Parameter verstanden werden, der ein magnetisches Feld definiert, wie beispielsweise ein magnetischer Fluss, eine magnetische Feldstärke, ein magnetischer Widerstand, eine magnetische Spannung usw. Der Begriff "ändern" soll hier insbesondere einstellen und/oder beeinflussen definieren. Die Relativbewegung ist bevorzugt eine Relativbewegung von zwei Bauteilen einer Abtriebseinheit, einer Antriebseinheit und/oder von zwei Bremselementen der Magnetfeldbremseinheit. Es kann vorteilhaft eine Einstellbarkeit der Magnetfeldbremseinheit infolge der Relativbewegung erreicht werden. Ferner kann vorteilhaft eine Aktivierung der Magnetfeldbremseinheit infolge einer Relativbewegung von zwei relativ zueinander beweglich gelagerten Bauteilen erreicht werden.

Vorzugsweise weist die Magnetfeldbremseinheit zumindest ein Bremselement auf, das als Permanentmagnet ausgebildet ist. Es ist jedoch auch denkbar, dass die Magnetfeldbremseinheit in einer alternativen Ausgestaltung ein als Spule ausgebildetes Bremselement zur Erzeugung eines magnetischen Felds aufweist. Besonders bevorzugt weist die Magnetfeldbremseinheit zumindest zwei Bremselemente auf, die als Permanentmagnete ausgebildet sind. Die zwei als Permanentmagnete ausgebildeten Bremselemente sind bevorzugt relativ zueinander beweglich gelagert, insbesondere relativ zueinander verdrehbar gelagert. Die Permanentmagnete sind vorzugsweise aus Selten-Erd-Magneten, wie beispielsweise Neodym-Eisen-Bor (NdFeB), Samarium-Cobalt (SmCo) usw. ausgeführt. Es ist jedoch auch denkbar, die Permanentmagnete aus einem anderen, einem Fachmann als sinnvoll erscheinenden Werkstoff auszuführen. Die Permanentmagnete sind vorzugsweise kreisringförmig ausgebildet. Des Weiteren weisen die Permanentmagnete vorzugsweise entlang einer Umfangsrichtung angeordnete Winkelsegmente auf, die entlang der Umfangsrichtung eine alternierende Polarität aufweisen. Es kann konstruktiv einfach eine Magnetfeldbremseinheit erreicht werden. Ferner kann vorteilhaft eine von einer Spannungsversorgung unabhängige Magnetfeldbremseinheit erreicht werden.

Ferner wird vorgeschlagen, dass die Aktivierungseinheit eine Polstellung des Permanentmagnets relativ zu einem weiteren als Permanentmagnet ausgebildeten Bremselement der Magnetfeldbremseinheit ändert. Unter einer "Polstellung ändern" soll hier insbesondere eine Änderung einer Stellung von Polen des Permanentmagnets relativ zu Polen des weiteren Permanentmagnets verstanden werden. Bevorzugt werden die Permanentmagnete relativ zueinander um eine Achse verdreht, insbesondere um einen einer Polteilung der Permanentmagnete entsprechenden Winkel. Unter einer "Polteilung" soll insbesondere eine Aufteilung einer Strecke, insbesondere eines Umfangs von 360°, der Permanentmagnete in gleichmäßig entlang einer Richtung, insbesondere der Umfangsrichtung, hintereinander angeordnete Polsegmente, insbesondere Winkelsegmente mit einer Polarität, der Permanentmagnete verstanden werden, wobei die Polsegmente entlang der Richtung eine relativ zueinander wechselnde Polarität aufweisen. Die Pole sind vorzugsweise entlang der Umfangsrichtung relativ zueinander versetzt angeordnet. Hierbei sind die Pole bevorzugt aneinander angrenzend angeordnet. Es ist jedoch auch denkbar, dass die Pole beabstandet zueinander angeordnet sind, insbesondere entlang der Umfangsrichtung betrachtet. Es kann konstruktiv einfach eine Veränderung des magnetischen Felds erzeugt werden, das dazu vorgesehen ist, ein Abbremsen eines sich bewegenden Bauteils zu erreichen.

Vorteilhafterweise ist die Magnetfeldbremseinheit als Wirbelstrombremse und/oder als Hysteresebremse ausgebildet. Unter einer "Wirbelstrombremse" soll hier insbesondere eine Bremse verstanden werden, die Wirbelstromverluste eines in einem Magnetfeld bewegten metallischen Elements zum Abbremsen des Elements nutzt. Bevorzugt ist zur Ausgestaltung der Magnetfeldbremseinheit als Wirbelstrombremse zwischen den zumindest zwei Permanentmagneten eine aus einem elektrisch vorteilhaft leitfähigen Material, wie beispielsweise Kupfer und/oder Aluminium, ausgebildete Wirbelscheibe angeordnet. Unter dem Begriff "zwischen" soll hier insbesondere eine räumliche Anordnung verstanden werden, bei der zumindest entlang einer Achse Bauteile hintereinander angeordnet sind und sich, entlang der Achse betrachtet, zumindest teilweise überdecken. Unter einer "Hysteresebremse" soll hier insbesondere eine Bremse verstanden werden, die mittels einer Ummagnetisierung eines sich in einem Magnetfeld bewegenden Elements, insbesondere eines ferromagnetischen Elements, eine Bremskraft und/oder ein Bremsmoment erzeugt. Bevorzugt ist zur Ausgestaltung der Magnetfeldbremseinheit als Hysteresebremse zwischen den zumindest zwei Permanentmagneten ein aus einem ferromagnetischen Material ausgebildetes Bremselement der Magnetfeldbremseinheit angeordnet. Mittels einer Ausgestaltung der Magnetfeldbremseinheit als Wirbelstrombremse kann vorteilhaft kostengünstig eine Magnetfeldbremseinheit erreicht werden. Mittels einer Ausgestaltung der Magnetfeldbremseinheit als Hysteresebremse kann vorteilhaft eine Magnetfeldbremseinheit mit einer langen Lebensdauer erreicht werden.

Des Weiteren wird vorgeschlagen, dass die Magnetfeldbremseinheit zumindest einen Elektromagnet aufweist. Der Elektromagnet ist insbesondere dazu vorgesehen, in zumindest einem Betriebsmodus ein magnetisches Feld der Magnetfeldbremseinheit zu beeinflussen. Der Elektromagnet kann ein zusätzliches Magnetfeld zu einem bereits bestehenden Magnetfeld der Magnetfeldbremseinheit erzeugen. Hierbei ist es denkbar, dass das zusätzliche Magnetfeld in einem Arbeitsmodus zumindest magnetische Kräfte des bereits bestehende Magnetfelds der Magnetfeldbremseinheit zumindest teilweise kompensiert und/oder zumindest im Vergleich zu einer Stärke der magnetischen Kraft des Magnetfelds in einem Bremsmodus zumindest teilweise abschwächt. Der Elektromagnet der Magnetfeldbremseinheit kann vorteilhaft ebenfalls dazu vorgesehen sein, während eines Anlaufens einer Elektromotoreinheit der tragbaren Werkzeugmaschine in einem Betriebsmodus ein zusätzliches Drehmoment zur Erreichung einer Arbeitsdrehzahl der Elektromotoreinheit in einer kurzen Zeitspanne zu ermöglichen, wie vorzugsweise zur Erreichung eines Boostbetriebs. Es kann vorteilhaft eine starkes magnetisches Feld der Magnetfeldbremseinheit erzeugt werden.

In einer alternativen Ausgestaltung der erfindungsgemäßen Werkzeugmaschinenbremsvorrichtung ist es denkbar, dass die Werkzeugmaschinenbremsvorrichtung zusätzlich zur Antriebseinheit zumindest eine Abtriebseinheit umfasst, die zumindest ein Abtriebselement aufweist, an dem zumindest ein Bremselement der Magnetfeldbremseinheit angeordnet ist. Unter einer "Abtriebseinheit" soll hier insbesondere eine Einheit verstanden werden, die mittels einer Antriebseinheit antreibbar ist und von der Antriebseinheit erzeugte Kräfte und/oder Drehmomente an ein Bearbeitungswerkzeug überträgt. Besonders bevorzugt ist die Abtriebseinheit als Winkelgetriebe ausgebildet. Unter einem "Winkelgetriebe" soll hier insbesondere ein Getriebe verstanden werden, das eine relativ zu einer Eingangswelle abgewinkelt angeordnete Ausgangswelle aufweist, wobei die Rotationsachsen der Eingangswelle und der Ausgangswelle vorzugsweise einen gemeinsamen Schnittpunkt aufweisen. Unter "abgewinkelt angeordnet" soll hier insbesondere eine Anordnung einer Achse relativ zu einer weiteren Achse verstanden werden, insbesondere von zwei sich schneidenden Achsen, wobei die zwei Achsen einen von 180° abweichenden Winkel einschließen. Bevorzugt schließen eine Rotationsachse der Eingangswelle und eine Rotationsachse der Ausgangswelle in einem montierten Zustand der als Winkelgetriebe ausgebildeten Abtriebseinheit einen Winkel von 90° ein. Unter einer "Eingangswelle" soll hier insbesondere eine Welle verstanden werden, die Kräfte und/oder Drehmomente in die als Winkelgetriebe ausgebildete Abtriebseinheit einleitet. Die Eingangswelle kann hierbei beispielsweise als eine mit einem Ritzel ausgeführte Ankerwelle einer Elektromotoreinheit der Antriebseinheit ausgebildet sein. Unter einer "Ausgangswelle" soll hier insbesondere eine Welle verstanden werden, die Kräfte und/oder Drehmomente beispielsweise an ein mit der Ausgangswelle drehfest verbundenes Bearbeitungswerkzeug überträgt. Unter "drehfest" soll insbesondere eine Verbindung verstanden werden, die ein Drehmoment und/oder eine Drehbewegung zumindest im Wesentlichen unverändert überträgt. Unter "zumindest im Wesentlichen unverändert übertragen" soll hier insbesondere eine bis auf einen Verlust infolge von Reibung und/oder von Toleranzen vollständige Übertragung von Kräften und/oder Drehmomenten von einem Bauteil auf ein weiteres Bauteil verstanden werden. Besonders bevorzugt ist die Magnetfeldbremseinheit entlang eines Kraftflusses, insbesondere eines Kraftflusses ausgehend von einer Elektromotoreinheit der Antriebseinheit, zumindest teilweise hinter einem Getriebeeingangszahnrad des Winkelgetriebes angeordnet. Unter einem "Getriebeeingangszahnrad" soll hier insbesondere ein Zahnrad verstanden werden, das in einem montierten Zustand des Winkelgetriebes mit einem Zahnrad der Eingangswelle, insbesondere mit einem Ritzel der Ankerwelle, in Eingriff ist. Es ist jedoch auch denkbar, dass ein als Permanentmagnet ausgebildetes Bremselement an einer einem Bearbeitungswerkzeug zugewandten Seite einer Werkzeugaufnahme angeordent ist und das Bearbeitungswerkzeug an einer der Werkzeugaufnahme zugewandten Seite ein als Wirbelstromelement und/oder Hystereseelement ausgebildets Bremselement umfasst.

Des Weiteren ist denkbar, dass die Magnetfeldbremseinheit als Montagemodul ausgebildet ist. Der Ausdruck "Montagemodul" soll hier insbesondere einen Aufbau einer Einheit definieren, bei der mehrere Bauteile vormontiert werden und die Einheit als Ganzes in einem Gesamtsystem, insbesondere in einer tragbaren Werkzeugmaschine, verbaut wird. Das Montagemodul weist bevorzugt zumindest ein Befestigungselement auf, das dazu vorgesehen ist, das Montagemodul mit dem Gesamtsystem lösbar zu verbinden. Vorteilhafterweise kann das Montagemodul insbesondere mit weniger als 10 Befestigungselementen von dem Gesamtsystem demontiert werden, bevorzugt mit weniger als 8 Befestigungselementen und besonders bevorzugt mit weniger als 5 Befestigungselementen. Die Befestigungselemente sind besonders bevorzugt als Schrauben ausgebildet. Es ist jedoch auch denkbar, dass die Befestigungselemente als andere, einem Fachmann als sinnvoll erscheinende Elemente, wie beispielsweise Schnellspannelemente, werkzeuglos betätigbare Befestigungselemente usw., ausgebildet sind. Vorzugsweise kann zumindest eine Funktion des Montagemoduls, insbesondere eine Änderung der Polstellung der Permanentmagnete zur Aktivierung der Magnetfeldbremseinheit, in einem von dem Gesamtsystem demontierten Zustand gewährleistet werden. Das Montagemodul kann besonders bevorzugt von einem Endnutzer demontiert werden. Somit ist das Montagemodul als austauschbare Einheit ausgebildet, die durch ein weiteres Montagemodul ausgetauscht werden kann, wie beispielsweise im Fall eines Defekts des Montagemoduls oder einer Funktionserweiterung und/oder Funktionsänderung des Gesamtsystems. Mittels einer Ausgestaltung der Magnetfeldbremseinheit als Montagemodul kann vorteilhaft ein breites Einsatzspektrum der Magnetfeldbremseinheit erreicht werden. Eine Integration in bereits bestehende tragbare Werkzeugmaschinen kann konstruktiv einfach erreicht werden. Des Weiteren können somit Produktionskosten vorteilhaft gering gehalten werden.

Die Erfindung geht ferner aus von einer tragbaren Werkzeugmaschine, insbesondere von einer tragbaren Handwerkzeugmaschine, mit einer erfindungsgemäßen Werkzeugmaschinenbremsvorrichtung, insbesondere mit einer Handwerkzeugmaschinenbremsvorrichtung. Die tragbare Werkzeugmaschine kann hierbei als Winkelschleifer, als Bohrmaschine, als Handkreissäge, als Meißelhammer und/oder als Bohrhammer usw. ausgebildet sein. Es kann vorteilhaft eine Sicherheitsfunktion für einen Bediener der tragbaren Werkzeugmaschine erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Werkzeugmaschinenbremsvorrichtung in einer schematischen Darstellung,
- Fig. 2: eine Detailansicht einer Anordnung der erfindungsgemäßen Werkzeugmaschinenbremsvorrichtung in der erfindungsgemäßen Werkzeugmaschine in einer schematischen Darstellung,
- Fig. 3: eine Detailansicht der erfindungsgemäßen Werkzeugmaschinenbremsvorrichtung in einer schematischen Darstellung,
- Fig. 4: eine Detailansicht eines als Permanentmagneten ausgebildeten Bremselements der Magnetfeldbremseinheit in einer schematischen Darstellung.
- Fig. 5: eine Detailansicht einer alternativen Werkzeugmaschine in einer schematischen Darstellung.

### Beschreibung der Ausführungsbeispiele

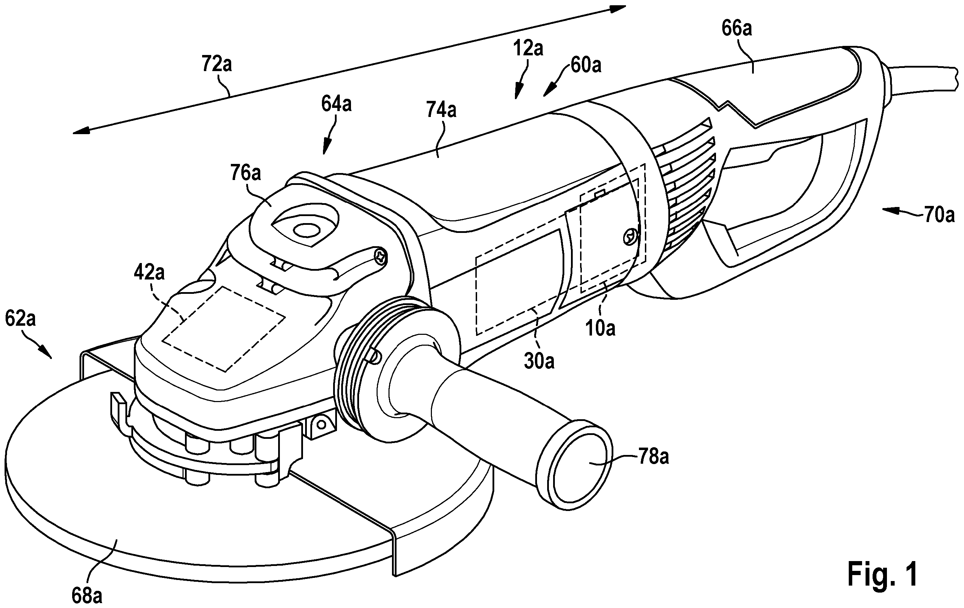

Figur 1 zeigt eine als Winkelschleifer 60a ausgebildete tragbare Werkzeugmaschine 12a mit einer Werkzeugmaschinenbremsvorrichtung 10a. Der Winkelschleifer 60a umfasst eine Schutzhaubeneinheit 62a, ein Werkzeugmaschinengehäuse 64a und einen Haupthandgriff 66a, der sich an einer einem Bearbeitungswerkzeug 68a abgewandten Seite 70a des Werkzeugmaschinengehäuses 64a in Richtung einer Haupterstreckungsrichtung 72a des Winkelschleifers 60a erstreckt. Das Bearbeitungswerkzeug 68a ist hierbei als Schleifscheibe ausgebildet. Es ist jedoch auch denkbar, dass das Bearbeitungswerkzeug 68a als Trenn- oder Polierscheibe ausgebildet ist. Das Werkzeugmaschinengehäuse 64a umfasst ein Motorgehäuse 74a zur Aufnahme einer Antriebseinheit 30a der Werkzeugmaschinenbremsvorrichtung 10a und ein Getriebegehäuse 76a zur Aufnahme einer Abtriebseinheit 42a des Winkelschleifers 60a. Die Antriebseinheit 30a ist dazu vorgesehen, das Bearbeitungswerkzeug 68a über die Abtriebseinheit 42a rotierend anzutreiben. An dem Getriebegehäuse 76a ist ein Zusatzhandgriff 78a angeordnet. Der Zusatzhandgriff 78a erstreckt sich quer zur Haupterstreckungsrichtung 72a des Winkelschleifers 60a.

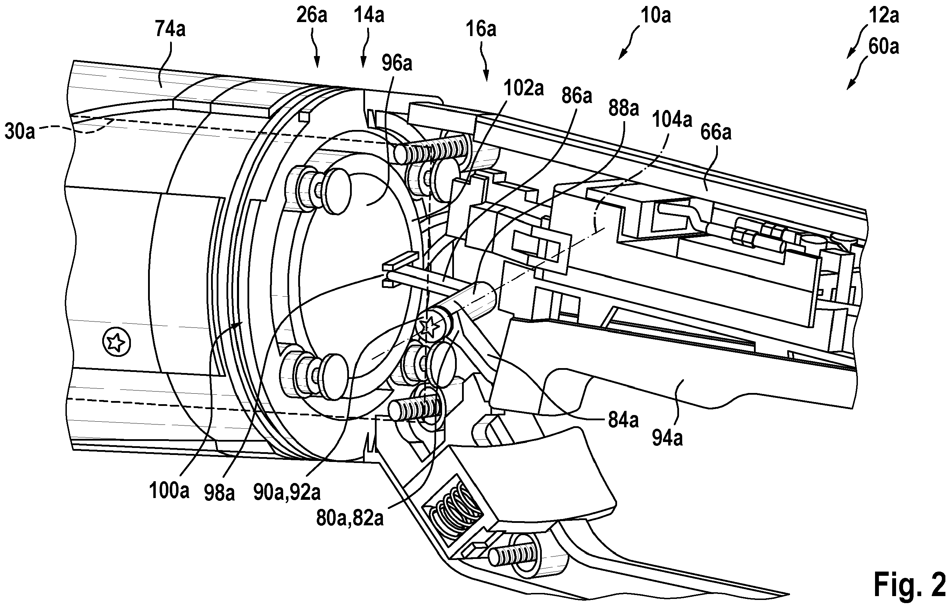

Figur 2 zeigt eine Anordnung der Werkzeugmaschinenbremsvorrichtung 10a im Motorgehäuse 74a des Winkelschleifers 60a. Die Werkzeugmaschinenbremsvorrichtung 10a ist in einem dem Haupthandgriff 66a zugewandten Bereich des Motorgehäuses 74a angeordnet. Die Werkzeugmaschinenbremsvorrichtung 10a umfasst eine Magnetfeldbremseinheit 14a und eine mechanische Aktivierungseinheit 16a, die dazu vorgesehen ist, die Magnetfeldbremseinheit 14a zu aktivieren. Die Magnetfeldbremseinheit 14a ist dazu vorgesehen, das Bearbeitungswerkzeug 68a, das sich infolge einer Massenträgheit des Bearbeitungswerkzeugs 68a nach einem Ausschalten des Winkelschleifers 60a weiterdreht, zu bremsen. Die mechanische Aktivierungseinheit 16a weist ein mechanisches Abtastelement 80a auf. Das Abtastelement 80a ist hierbei als Hebelelement 82a ausgebildet. Das Hebelelement 82a weist zwei zueinander abgewinkelte Hebelarme 84a, 86a auf. Die zwei Hebelarme 84a, 86a sind mittels eines Lagerungselements 88a des Hebelelements 82a starr miteinander verbunden. Das Lagerungselement 88a ist dazu vorgesehen, das Hebelelement 82a mittels eines Zusammenwirkens mit einem als Schraube 90a ausgebildeten Befestigungselement 92a drehbar an einer Innenfläche des Motorgehäuses 74a zu lagern. Das Hebelelement 82a ist dazu vorgesehen, eine Bewegung eines im Haupthandgriff 66a angeordneten Betätigungsschalters 94a des Winkelschleifers 60a abzugreifen und an ein Betätigungselement 96a der Aktivierungseinheit 16a zu übertragen. Hierbei ist das Hebelelement 82a mit dem dem Haupthandgriff 66a zugewandten Hebelarm 84a mechanisch mit dem Betätigungsschalter 94a des Winkelschleifers 60a gekoppelt. Ferner ist das Hebelelement 82a mit dem dem Haupthandgriff 66a abgewandten Hebelarm 86a mit dem Betätigungselement 96a der Aktivierungseinheit 16a gekoppelt. Der dem Haupthandgriff 66a abgewandte Hebelarm 86a greift hierbei in eine Kopplungsnut 98a des Betätigungselements 96a ein. Das Betätigungselement 96a ist an einer Gehäuseeinheit 100a der Magnetfeldbremseinheit 14a angeordnet. Die Gehäuseeinheit 100a weist ein topfförmiges Aufnahmeelement 102a auf. Das topfförmige Aufnahmeelement 102a ist aus einem unmagnetisierbaren Material, wie beispielsweise Aluminium, Edelstahl usw., gebildet. Das Betätigungselement 96a ist ebenfalls ist aus einem unmagnetisierbaren Material, wie beispielsweise Aluminium, Edelstahl usw., gebildet. Hierdurch können Streuflüsse der Magnetfeldbremseinheit 14a gering gehalten werden. Das Betätigungselement 96a ist drehbar in dem topfförmigen Aufnahmeelement 102a der Gehäuseeinheit 100a angeordnet. Bei einer Betätigung des Betätigungsschalters 94a durch einen Bediener wird das Hebelelement 82a um eine Schwenkachse 104a, die durch das Lagerungselement 88a und durch die Schraube 90a definiert wird, geschwenkt. Hierbei wird das Betätigungselement 96a zur Aktivierung der Magnetfeldbremseinheit 14a im topfförmigen Aufnahmeelement 102a relativ zum topfförmigen Aufnahmeelement 102a mittels des Hebelelements 82a verdreht.

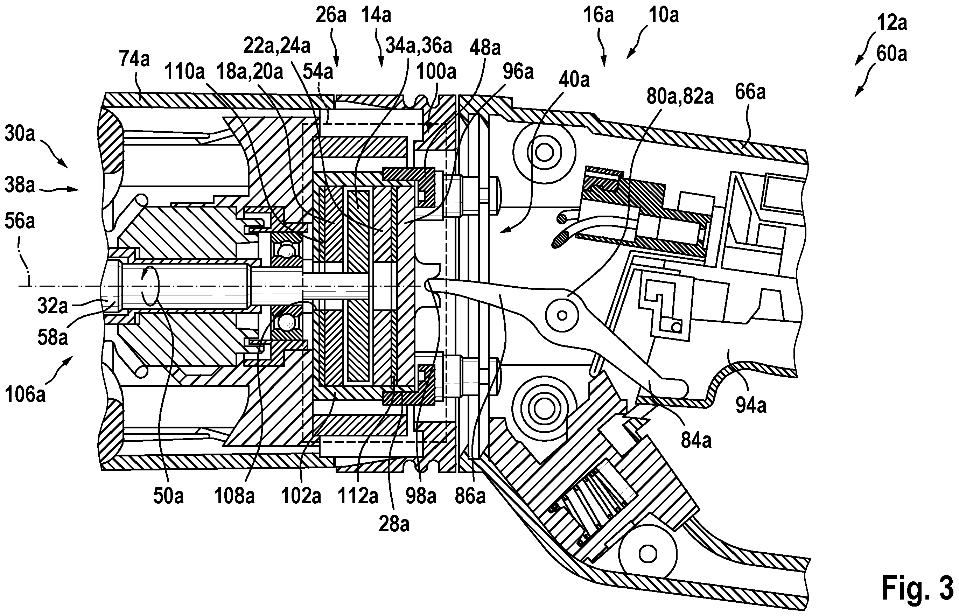

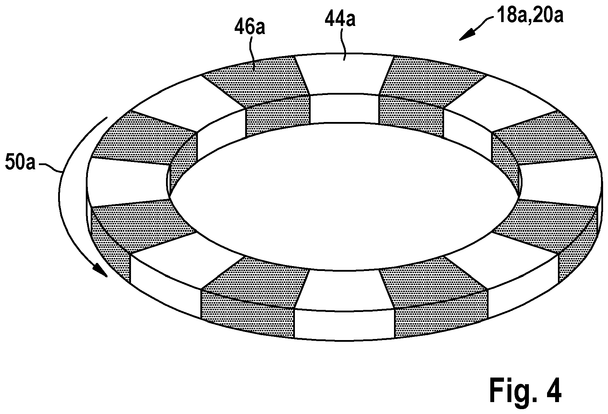

Figur 3 zeigt die Magnetfeldbremseinheit 14a der Werkzeugmaschinenbremsvorrichtung 10a in einer Schnittansicht. Das topfförmige Aufnahmeelement 102a der Gehäuseeinheit 100a wird bei einer Montage entlang einer Rotationsachse 56a eines als Ankerwelle 58a einer Elektromotoreinheit 106a ausgebildeten Antriebselements 32a der Antriebseinheit 42a mit einer zentralen Öffnung 108a des topfförmigen Aufnahmeelements 102a über die Ankerwelle 58a geschoben. Zwischen der zentralen Öffnung 108a und der Ankerwelle 58a können Dichtungselemente angeordnet sein, die ein Eindringen von Schmutz in einem montierten Zustand verhindern können. Das topfförmige Aufnahmeelement 102a der Gehäuseeinheit 100a ist mittels hier nicht dargestellter Halteelemente drehfest und axial im Motorgehäuse 74a fixiert. In dem topfförmigen Aufnahmeelement 102a sind ein Rückschlusselement 110a und ein als erster Permanentmagnet 20a ausgebildetes Bremselement 18a der Magnetfeldbremseinheit 14a angeordnet. Das Rückschlusselement 110a und der erste Permanentmagnet 20a sind drehfest miteinander und drehfest mit dem topfförmigen Aufnahmeelement 102a verbunden. Das Rückschlusselement 110a ist dazu vorgesehen, ein magnetisches Feld des ersten Permanentmagnets 20a im Bereich des ersten Permanentmagnets 20a zu verdichten. Das Rückschlusselement 110a ist aus einem ferromagnetischen Material gebildet. Es ist jedoch auch denkbar, dass das Rückschlusselement 110a aus einem anderen, einem Fachmann als sinnvoll erscheinenden Material gebildet ist. Der erste Permanentmagnet 20a ist kreisringförmig ausgebildet (Figur 4). Ferner weist der erste Permanentmagnet 20a entlang einer Umfangsrichtung 50a gleichmäßig verteilte Winkelsegmente 44a, 46a auf. Die Winkelsegmente 44a, 46a weisen entlang der Umfangsrichtung 50a eine relativ zueinander wechselnde Polarität auf. Des Weiteren weist die Magnetfeldbremseinheit 14a ein weiteres Bremselement 34a auf, das als Wirbelstromelement 36a ausgebildet ist. Somit ist die Magnetfeldbremseinheit 14a als Wirbelstrombremse 26a ausgebildet. Es ist jedoch auch denkbar, die Magnetfeldbremseinheit 14a als eine andere elektromagnetische Bremseinheit, wie beispielsweise als eine Hysteresebremse, eine Magnetpulverbremse usw., auszubilden. Das Wirbelstromelement 36a ist aus einem elektrisch leitfähigen Material gebildet, wie beispielsweise Aluminium und/oder Kupfer. Ferner ist das Wirbelstromelement 36a kreisringförmig ausgebildet. Das Wirbelstromelement 36a ist drehfest mit der Ankerwelle 58a verbunden. Das als Wirbelstromelement 36a ausgebildete Bremselement 34a ist auf einer einer Antriebsseite 38a abgewandten Seite 40a der Antriebseinheit 30a auf der Ankerwelle 58a angeordnet.

Des Weiteren weist die Magnetfeldbremseinheit 14a ein weiteres als zweiten Permanentmagnet 22a ausgebildetes Bremselement 24a auf. Der zweite Permanentmagnet 22a ist kreisringförmig ausgebildet. Ferner weist der zweite Permanentmagnet 22a entlang der Umfangsrichtung 50a gleichmäßig verteilte Winkelsegmente auf. Die Winkelsegmente weisen entlang der Umfangsrichtung 50a eine relativ zueinander wechselnde Polarität auf. Die Magnetfeldbremseinheit 14a weist ferner ein weiteres Rückschlusselement 112a auf. Das weitere Rückschlusselement 112a ist drehfest mit dem zweiten Permanentmagnet 22a verbunden. Der zweite Permanentmagnet 22a und das Rückschlusselement 112a sind drehfest mit dem Betätigungselement 96a der Aktivierungseinheit 16a verbunden. Das Betätigungselement 96a wird bei einer Montage in das topfförmige Aufnahmeelement 102a der Gehäuseeinheit 100a entlang der Rotationsachse 56a der Ankerwelle 58a eingeschoben, bis das Betätigungselement 96a an einem Bund (hier nicht dargestellt) des topfförmigen Aufnahmeelements 102a anliegt. Der Bund ist dazu vorgesehen, ein Axialspiel zwischen dem zweiten Permanentmagnet 22a und dem Wirbelstromelement 36a, entlang der Rotationsachse 56a der Ankerwelle 58a betrachtet, zu gewährleisten. Zur weiteren axialen Fixierung des Betätigungselements 96a im topfförmigen Aufnahmeelement 102a weist die Gehäuseeinheit 100a ein Verschlusselement 48a. Das Verschlusselement 48a wird bei einer Montage mittels eines Gewindes 28a auf das topfförmige Aufnahmeelement 102a aufgeschraubt. Es ist jedoch auch denkbar, dass das Verschlusselement 48a mittels einer anderen, einem Fachmann als sinnvoll erscheinenden Verbindungsart, wie beispielsweise mittels Pressen, Kleben usw., mit dem topfförmigen Aufnahmeelement 102a verbunden ist. Zwischen dem Betätigungselement 96a und dem Verschlusselement 48a können Dichtungselemente angeordnet sein, die ein Eindringen von Schmutz verhindern können. Das Wirbelstromelement 36a ist, entlang der Rotationsachse 56a der Ankerwelle 58a betrachtet, zwischen dem ersten Permanentmagnet 20a und dem zweiten Permanentmagnet 22a innerhalb der Gehäuseeeinheit 100a der Magnetfeldbremseinheit 14a angeordnet. Des Weiteren dreht sich das Wirbelstromelement 36a in einem Betrieb des Winkelschleifers 60a zusammen mit der Ankerwelle 58a um die Rotationsachse 56a der Ankerwelle 58a relativ zu dem ersten Permanentmagnet 20a und relativ zu dem zweiten Permanentmagnet 22a. Der erste Permanentmagnet 20a, der zweite Permanentmagnet 22a und das Wirbelstromelement 36a weisen entlang der Rotationsachse 56a der Ankerwelle 58a eine axiale Überdeckung auf. Es ist jedoch auch denkbar, dass der erste Permanentmagnet 20a, der zweite Permanentmagnet 22a und das Wirbelstromelement 36a eine radiale Überdeckung oder eine axiale Überdeckung in Kombination mit einer radialen Überdeckung aufweisen.

Die Magnetfeldbremseinheit 14a ist in einem Ruhezustand des Winkelschleifers 60a in einem Bremsmodus. Im Bremsmodus stehen sich jeweils entgegengesetzt gerichtete Polaritäten der Winkelsegmente 44a, 46a des ersten Permanentmagnets 20a und der Winkelsegmente des zweiten Permanentmagnets 22a, entlang der Rotationsachse 56a der Ankerwelle 58a betrachtet, gegenüber. Bei einer Inbetriebnahme des Winkelschleifers 60a mittels einer Betätigung des Betätigungsschalters 94a im Haupthandgriff 66a durch den Bediener zur Bestromung der Elektromotoreinheit 106a verdreht das Hebelelement 82a das Betätigungselement 96a relativ zum topfförmigen Aufnahmeelement 102a. Somit wird der zweite Permanentmagnet 22a relativ zum ersten Permanentmagnet 20a verdreht. Hierdurch wird die Magnetfeldbremseinheit 14a in einen Betriebsmodus geschaltet, in dem geringe magnetische Kräfte der Magnetfeldbremseinheit 14a auf das Wirbelstromelement 36a einwirken. Die Aktivierungseinheit 16a ist dazu vorgesehen, infolge der Relativbewegung eine Kenngröße eines magnetischen Felds der Magnetfeldbremseinheit 14a zu ändern. Hierbei ändert die Aktivierungseinheit 16a bei einem Übergang von einem Bremsmodus in einen Betriebsmodus eine Polstellung des ersten Permanentmagnets 20a relativ zu dem zweiten Permanentmagnet 22a der Magnetfeldbremseinheit 14a. Im Betriebsmodus stehen sich somit jeweils gleich gerichtete Polaritäten der Winkelsegmente 44a, 46a des ersten Permanentmagnets 20a und der Winkelsegmente des zweiten Permanentmagnets 22a, entlang der Rotationsachse 56a der Ankerwelle 58a betrachtet, gegenüber.

Bei einem Ausschalten des Winkelschleifers 60a infolge eines Wegfalls einer Krafteinwirkung des Bedieners auf den Betätigungsschalter 94a im Haupthandgriff 66a verdreht das Hebelelement 82a das Betätigungselement 96a relativ zum topfförmigen Aufnahmeelement 102a. Die Magnetfeldbremseinheit 14a wird in einen Bremsmodus geschaltet. Die zwei Permanentmagnete 20a, 22a werden relativ zueinander verdreht. Der zweite Permanentmagnet 22a wird hierbei relativ zum ersten Permanentmagnet 20a verdreht, bis sich jeweils entgegengesetzt gerichtete Polaritäten der Winkelsegmente 44a, 46a des ersten Permanentmagnets 20a und der Winkelsegmente des zweiten Permanentmagnets 22a, entlang der Rotationsachse 56a der Ankerwelle 58a betrachtet, gegenüberstehen. Hierdurch wird im Wirbelstromelement 36a, das sich infolge einer Massenträgheit nach einem Wegfall eines Antriebsmoments weiterdreht, eine Spannung induziert. Die induzierte Spannung bewirkt einen Stromfluss senkrecht und wirbeiförmig zu einem magnetischen Fluss der Magnetfeldbremseinheit 14a. Hierbei werden Wirbelströme gebildet. Die Wirbelströme erzeugen in dem Wirbelstromelement 36a ein magnetisches Feld, das einem magnetischen Feld der Permanentmagnete 20a, 22a entgegenwirkt. Hierdurch wird ein Bremsmoment erzeugt, welches das Wirbelstromelement 36a abbremst. Die Ankerwelle 58a wird infolge der drehfesten Verbindung des Wirbelstromelements 36a mit der Ankerwelle 58a ebenfalls abgebremst. Mittels der Kopplung der Antriebseinheit 30a und der Abtriebseinheit 42a wird das Bearbeitungswerkzeug 68a somit ebenfalls abgebremst. Eine Stärke des magnetischen Felds der Magnetfeldbremseinheit 14a und somit eine Ausbreitung eines magnetischen Flusses der Magnetfeldbremseinheit 14a zur Erzeugung des Bremsmoments ist abhängig von einer Distanz entlang der Rotationsachse 56a zwischen dem ersten Permanentmagnet 20a und dem zweiten Permanentmagnet 22a und einer Polstellung entlang der Umfangsrichtung 50a des ersten Permanentmagnets 20a und des zweiten Permanentmagnets 22a relativ zueinander.

Die Aktivierungseinheit 14a weist ferner ein Rückstellelement (hier nicht näher dargestellt) auf, das dazu vorgesehen ist, bei einem Wegfall einer Krafteinwirkung des Bedieners auf den Betätigungsschalter 94a die Magnetfeldbremseinheit 14a zuverlässig in einen Bremsmodus zu schalten. Das Rückstellelement kann hierbei an dem Betätigungselement 96a angeordnet sein oder an dem Hebelelement 82a. Es ist jedoch auch denkbar, dass das Rückstellelement an dem Betätigungsschalter 94a angeordnet ist und auf den Betätigungsschalter 94a einwirkt.

Des Weiteren weist der Winkelschleifer 60a eine Ablaufsicherungseinheit (hier nicht näher dargestellt) auf, die dazu vorgesehen ist, das mittels eines Befestigungselement auf einer Spindel des Winkelschleifers 60a befestigte Bearbeitungswerkzeug 68a in einem Bremsmodus gegen ein Ablaufen von der Spindel zu sichern. Die Ablaufsicherungseinheit ist drehfest mit der Spindel des Winkelschleifers 60a verbunden.

In einer alternativen Ausführung der Werkzeugmaschinenbremsvorrichtung 10a ist es denkbar, die Magnetfeldbremseinheit 14a als Montagemodul 54a (lediglich gestrichelt angedeutet) auszuführen. Hierbei können der erste Permanentmagnet 20a, der zweite Permanentmagnet 22a und das Wirbelstromelement 36a vormontiert in der Gehäuseeinheit 100a ausgebildet sein. Das Wirbelstromelement 36a kann hierbei beispielsweise auf einer Welle drehbar in der Gehäuseeinheit 100a angeordnet sein, die mittels einer Kupplung und/oder einem zwischengeschalteten Getriebe mit der Ankerwelle 58a verbunden werden kann. Ferner ist es bei einer Ausbildung der Magnetfeldbremseinheit 14a als Montagemodul auch denkbar, dass der erste Permanentmagnet 20a, der zweite Permanentmagnet 22a und das Wirbelstromelement 36a vormontiert in der Gehäuseeinheit 100a ausgebildet sein können und das Betätigungselement 96a eine Montageausnehmung aufweist, die dazu vorgesehen ist, einem Bediener eine Montage des Wirbelstromelements 36a auf der Ankerwelle 58a zu ermöglichen. Nach der Montage kann die Montageausnehmung beispielsweise mittels eines Stopfens verschlossen werden. Des Weiteren ist es denkbar, dass die Werkzeugmaschinenbremsvorrichtung 10a eine Sicherheitseinheit aufweist, die dazu vorgesehen ist, die Magnetfeldbremseinheit 14a beispielsweise bei einem Zerbersten eines Werkzeugs zu aktivieren oder bei einer Unterbrechung einer Spannungsversorgung des Winkelschleifers 60a infolge beispielsweise eines defekten Spannungsversorgungskabels zu aktivieren. Die Sicherheitseinheit kann hierbei mechanisch, elektrisch und/oder elektronisch ausgebildet sein. Ferner ist es denkbar, dass die Werkzeugmaschinenbremsvorrichtung 10a zusätzlich zur Magnetfeldbremseinheit 14a eine weitere Magnetfeldbremseinheit aufweist, die im Getriebegehäuse 76a angeordnet ist. Hierbei könnte die Werkzeugmaschinenbremsvorrichtung 10a die Abtriebseinheit 42a umfassen, die ein Abtriebselement aufweist, an dem ein Bremselement der weiteren Magnetfeldbremseinheit angeordnet ist. Ferner ist es denkbar, dass die Werkzeugmaschinenbremsvorrichtung 10a zusätzlich zu einer Lüftereinheit der Antriebseinheit 30a eine Kühleinheit umfasst, die dazu vorgesehen ist, von der Magnetfeldbremseinheit 14a im Bremsmodus infolge einer inneren Reibung des Wirbelstromelements 36a erzeugte Wärme abzuführen.

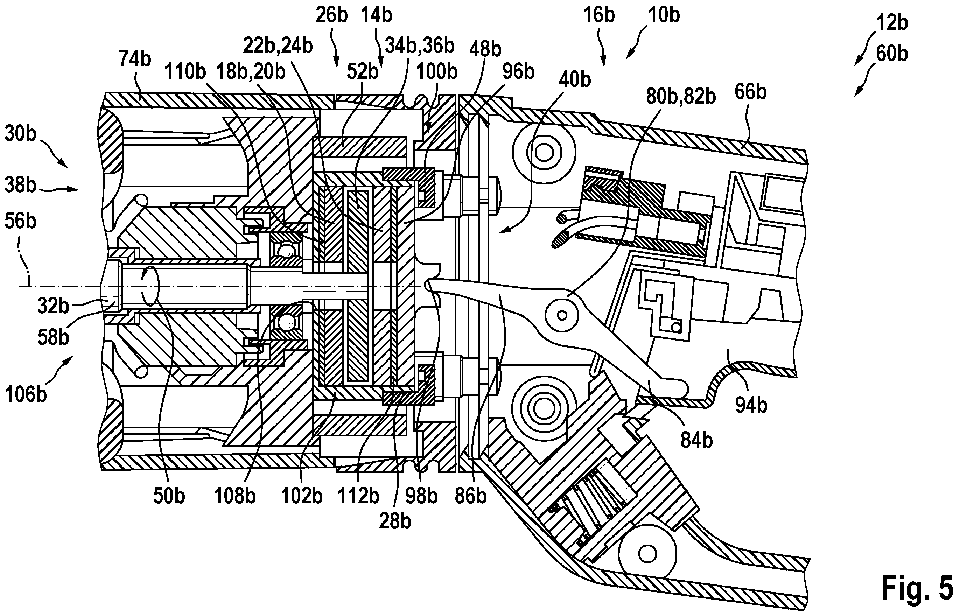

In Figur 5 ist ein alternatives Ausführungsbeispiel dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a und b hinzugefügt. Die nachfolgende Beschreibung beschränkt sich im Wesentlichen auf die Unterschiede zu dem ersten Ausführungsbeispiel in den Figuren 1 bis 4, wobei bezüglich gleichbleibender Bauteile, Merkmale und Funktionen auf die Beschreibung des ersten Ausführungsbeispiels in den Figuren 1 bis 4 verwiesen werden kann.

Figur 5 zeigt eine Werkzeugmaschinenbremsvorrichtung 10b einer als Winkelschleifer 60b ausgebildeten tragbaren Werkzeugmaschine 12b. Die Werkzeugmaschinenbremsvorrichtung 10b ist in einem Motorgehäuse 74b des Winkelschleifers 60b angeordnet. Hierbei weist die Werkzeugmaschinenbremsvorrichtung 10b eine Magnetfeldbremseinheit 14b und eine Antriebseinheit 30b auf. Die Antriebseinheit 30b weist ein Antriebselement 32b auf, an dem ein Bremselement 34b der Magnetfeldbremseinheit 14b angeordnet ist. Das Antriebselement 32b an dem das Bremselement 34b angeordnet ist, ist als Ankerwelle 58b ausgebildet. Das Bremselement 34b ist hierbei als Wirbelstromelement 36b ausgebildet. Das Wirbelstromelement 36b ist drehfest mit der Ankerwelle 58b verbunden. Somit wird das Wirbelstromelement 36b in einem Betrieb des Winkelschleifers 60b mit der Ankerwelle 58b rotierend um eine Rotationsachse 56b der Ankerwelle 58b angetrieben.

Des Weiteren weist die Magnetfeldbremseinheit 14b ein als erster Permanentmagnet 20b ausgebildetes Bremselement 18b auf. Der erste Permanentmagnet 20b ist drehfest mit einem drehfest im Motorgehäuse 74b angeordneten topfförmigen Aufnahmeelement 102b einer Gehäuseeinheit 100b der Magnetfeldbremseinheit 14b angeordnet. Ferner weist die Magnetfeldbremseinheit 14b ein weiteres als zweiten Permanentmagnet 22b ausgebildetes Bremselement 24b auf. Der zweite Permanentmagnet 22b ist drehfest mit einem Betätigungselement 96b einer Aktivierungseinheit 16b der Werkzeugmaschinenbremsvorrichtung 10b verbunden. Das Wirbelstromelement 36b ist, entlang der Rotationsachse 56b betrachtet, zwischen den Permanentmagneten 20b, 22b angeordnet. Im Betrieb des Winkelschleifers 60b rotiert das Wirbelstromelement 36b relativ zu den Permanentmagneten 20b, 22b.

Die Magnetfeldbremseinheit 14b weist ferner einen Elektromagnet 52b auf. Der Elektromagnet 52b ist dazu vorgesehen, ein magnetisches Feld der Permanentmagnete 20b, 22b zu beeinflussen. Der Elektromagnet 52b wirkt in bei einem Anlaufen der Antriebseinheit 30b auf das magnetische Feld der Permanentmagnete 20b, 22b ein. Hierdurch wird eine Wirkung des magnetischen Felds der Permanentmagnete 20b, 22b auf das Wirbelstrom element 36b gering. Ein einem Anlaufdrehmoment der Antriebseinheit 30b entgegewirkendes Drehmoment des magnetischen Felds der Permanentmagnete 20b, 22b kann verringert werden. Es ist jedoch auch denkbar, dass der Elektromagnet 52b dazu vorgesehen ist, ein magnetsiches Feld der Permanentmagnete 20b, 22b zu verstärken. Hierdurch kann ein starkes Bremsmoment zum Abbremsen des Wirbelstromelements 36b erreicht werden. Der Elektromagnet 52b kann hierbei beispielsweise mit einer Sicherheitseinheit (hier nicht dargestellt) gekoppelt sein, die ein den Elektromagnet 52b beispielsweise bei einem Bersten eines Bearbeitungswerkzeug 68b aktiviert, um ein Weiterdrehen einer Spindel des Winkelschleifers 60b zu verhindern bzw. abzubremsen.

In einer alterantiven, hier nicht dargestellten Ausführung ist es denkbar, dass der Elektromagnet 52b die Permanentmagnete 20b, 22b ersetzt. Ein magnetisches Feld zum Abbremsen des Wirbelstrom elements 36b würde somit mittels des Elektromagnets 52b erzeugt. Der Elektromagnet 52b kann ferner dazu vorgesehen sein, während eines Anlaufens der Antriebseinheit 30b ein zusätzliches Drehmoment zur Erreichung einer Arbeitsdrehzahl der Elektromotoreinheit in einer kurzen Zeitspanne zu ermöglichen, wie vorzugsweise zur Erreichung eines Boostbetriebs.

## Patentansprüche

1. Werkzeugmaschinenbremsvorrichtung, insbesondere Handwerkzeugmaschinenbremsvorrichtung, einer tragbaren Werkzeugmaschine (12a; 12b) mit zumindest einer Magnetfeldbremseinheit (14a; 14b), mit zumindest einer Antriebseinheit (30a; 30b), die zumindest ein Antriebselement (32a; 32b) aufweist, an dem zumindest ein Bremselement (18a, 24a, 34a, 36a, 18b, 24b, 34b, 36b) der Magnetfeldbremseinheit (14a; 14b) angeordnet ist, **gekennzeichnet duch** zumindest eine mechanische Aktivierungseinheit (16a; 16b), wobei die Aktivierungseinheit (16a; 16b) infolge einer Relativbewegung wenigstens eine Kenngröße eines magnetischen Felds der Magnetfeldbremseinheit (14a; 14b) ändert.

2. Werkzeugmaschinenbremsvorrichtung nach Anspruch 1,
**dadurch gekennzeichnet, dass** das Antriebselement (32a; 32b) an dem das Bremselement (34a, 36a; 34b, 36b) zumindest teilweise angeordnet ist, als Ankerwelle (58a, 58b) ausgebildet ist.

3. Werkzeugmaschinenbremsvorrichtung zumindest nach Anspruch 1,
**dadurch gekennzeichnet, dass** das Bremselement (34a, 36a; 34b, 36b) auf einer einer Antriebsseite (38a; 38b) abgewandten Seite (40a; 40b) der Antriebseinheit (30a; 30b) angeordnet ist.

4. Werkzeugmaschinenbremsvorrichtung nach einem der vorhergehenden Ansprüche,
**dadurch gekennzeichnet, dass** die Magnetfeldbremseinheit (14a; 14b) zumindest ein Bremselement (18a, 24a; 18b, 24b) aufweist, das als Permanentmagnet (20a, 22a; 20b, 22b) ausgebildet ist:

5. Werkzeugmaschinenbremsvorrichtung nach Anspruch 4,
**dadurch gekennzeichnet, dass** die Aktivierungseinheit (16a; 16b) eine Polstellung des Permanentmagneten (20a; 20b) relativ zu einem weiteren als Permanentmagnet (22a; 22b) ausgebildeten Bremselement (24a; 24b) der Magnetfeldbremseinheit (14a; 14b) ändert.

6. Werkzeugmaschinenbremsvorrichtung nach einem der vorhergehenden Ansprüche,
**dadurch gekennzeichnet, dass** die Magnetfeldbremseinheit (14a; 14b) als Wirbelstrombremse und/oder als Hysteresebremse ausgebildet ist.

7. Werkzeugmaschinenbremsvorrichtung nach einem der vorhergehenden Ansprüche,
**dadurch gekennzeichnet, dass** die Magnetfeldbremseinheit (14b) zumindest einen Elektromagnet (52b) aufweist.

8. Tragbare Werkzeugmaschine, insbesondere Handwerkzeugmaschine, mit einer Werkzeugmaschinenbremsvorrichtung nach einem der vorhergehenden Ansprüche.

## Claims

1. Power tool braking device, in particular hand-held power tool braking device, for a portable power tool (12a; 12b) having at least one magnetic-field braking unit (14a; 14b), having at least one drive unit (30a; 30b) which has at least one drive element (32a; 32b) on which at least one braking element (18a, 24a, 34a, 36a, 18b, 24b, 34b, 36b) of the magnetic-field braking unit (14a; 14b) is arranged,
**characterized by** at least one mechanical activation unit (16a; 16b), wherein the activation unit (16a, 16b) changes at least one variable of a magnetic field of the magnetic-field braking unit (14a; 14b) as a result of a relative movement.

2. Power tool braking device according to Claim 1,
**characterized in that** the drive element (32a; 32b) on which the braking element (34a, 36a; 34b, 36b) is at least partially arranged is configured as an armature shaft (58a, 58b).

3. Power tool braking device at least according to Claim 1,
**characterized in that** the braking element (34a, 36a; 34b, 36b) is arranged on a side (40a; 40b) of the drive unit (30a; 30b) that faces away from a drive side (38a; 38b).

4. Power tool braking device according to one of the preceding claims,
**characterized in that** the magnetic-field braking unit (14a; 14b) has at least one braking element (18a, 24a; 18b, 24b) which is configured as a permanent magnet (20a, 22a; 20b, 22b).

5. Power tool braking device according to Claim 4, **characterized in that** the activation unit (16a, 16b) changes a pole position of the permanent magnets (20a; 20b) relative to a further braking unit (24a; 24b), configured as a permanent magnet (22a; 22b), of the magnetic-field braking unit (14a; 14b).

6. Power tool braking device according to one of the preceding claims,
**characterized in that** the magnetic-field braking unit (14a; 14b) is configured as an eddy current brake and/or as a hysteresis brake.

7. Power tool braking device according to one of the preceding claims,
**characterized in that** the magnetic-field braking unit (14b) has at least one electromagnet (52b).

8. Portable power tool, in particular hand-held power tool, having a power tool braking device according to one of the preceding claims.

## Revendications

1. Dispositif de freinage de machine-outil, en particulier dispositif de freinage de machine-outil à main, d'une machine-outil portable (12a; 12b) avec au moins une unité de freinage à champ magnétique (14a; 14b), avec au moins une unité d'entraînement (30a; 30b), qui présente au moins un élément d'entraînement (32a; 32b), sur lequel au moins un élément de frein (18a, 24a, 34a, 36a, 18b, 24b, 34b, 36b) de l'unité de freinage à champ magnétique (14a; 14b) est disposé, **caractérisé par** au moins une unité d'activation mécanique (16a; 16b), dans lequel l'unité d'activation (16a; 16b) change au moins une grandeur caractéristique d'un champ magnétique de l'unité de freinage à champ magnétique (14a; 14b) à la suite d'un mouvement relatif.

2. Dispositif de freinage de machine-outil selon la revendication 1, **caractérisé en ce que** l'élément d'entraînement (32a; 32b) sur lequel l'élément de frein (34a, 36a; 34b, 36b) est disposé au moins en partie, est réalisé en forme d'arbre d'induit (58a, 58b).

3. Dispositif de freinage de machine-outil au moins selon la revendication 1, **caractérisé en ce que** l'élément de frein (34a, 36a; 34b, 36b) est disposé sur un côté (40a; 40b) de l'unité d'entraînement (30a; 30b) situé à l'opposé d'un côté d'entraînement (38a; 38b).

4. Dispositif de freinage de machine-outil selon l'une quelconque des revendications précédentes, **caractérisé en ce que** l'unité de freinage à champ magnétique (14a; 14b) présente au moins un élément de frein (18a, 24a; 18b, 24b), qui est constitué par un aimant permanent (20a, 22a; 20b, 22b).

5. Dispositif de freinage de machine-outil selon la revendication 4, **caractérisé en ce que** l'unité d'activation (16a; 16b) change une position polaire de l'aimant permanent (20a; 20b) par rapport à un autre élément de frein (24a; 24b) de l'unité de freinage à champ magnétique (14a; 14b) constitué par un aimant permanent (22a; 22b).

6. Dispositif de freinage de machine-outil selon l'une quelconque des revendications précédentes, **caractérisé en ce que** l'unité de freinage à champ magnétique (14a; 14b) est réalisée sous forme de frein à courants de Foucault et/ou de frein à hystérésis.

7. Dispositif de freinage de machine-outil selon l'une quelconque des revendications précédentes, **caractérisé en ce que** l'unité de freinage à champ magnétique (14b) présente au moins un électroaimant (52b).

8. Machine-outil portable, en particulier machine-outil à main, avec un dispositif de freinage de machine-outil selon l'une quelconque des revendications précédentes.
